# EUROPEAN PATENT SPECIFICATION

(11) **EP 0 535 223 B1**
(45) Date of publication and mention of the grant of the patent: **18.09.1996**
(21) Application number: 92922786.6
(22) Date of filing: 16.04.1991
(51) Int. Cl.: C08J 5/08, B29D 23/24

(54) **PROCESS FOR PRODUCING TUBES OR PIPES FORMED FROM A THERMOPLASTIC POWDER IMPREGNATED FIBERGLASS ROVING**
VERFAHREN ZUR HERSTELLUNG VON ROHREN ODER LEITUNGEN AUS MIT THERMOPLASTISCHEM PUDER IMPRÄGNIERTEM GLASSFASER-STRANG
PROCEDE DE PREPARATION DE TUBES OU CONDUITES FORMES D'UN ROVING IMPREGNE DE POUDRE THERMOPLASTIQUE

(43) Date of publication of application: 07.04.1993
(73) Proprietor: OWENS CORNING, Toledo, Ohio 43659 (US)
(72) Inventor: POLLET, Jean-Claude, F-78740 Vaux-sur-Seine (FR); WILLIAMS, Gary, Lynn, Newark, OH 43055 (US); ARMSTRONG, Gordon, Patrick, Sugarloaf, PA 18249 (US); MILLER, David, George, Anderson, SC 29625 (US)
(74) Representative: West, Alan Harry
(86) International application number: PCT/US91/02502
(87) International publication number: WO 92/18559

(56) References cited:
- US-A- 3 450 658
- US-A- 3 472 729
- US-A- 4 039 716
- Database WPIL, no. 91-148208, Derwent Publications Ltd, London GB, & US,A, 5009941 (OWENS CORNING FIBERGLASS) 23 April 1991, see abstract

## Description

This invention relates to a process for producing a tube or pipe from a thermoplastic powder-impregnated fiberglass roving. The fiberglass roving is a highly loaded, impregnated fibrous strand where the impregnation takes place during the fiber forming operation. In one of its more specific aspects, this invention relates to a process for producing a filament-wound tube or pipe using polyethylene powder-impregnated glass fiber strands.

The production and use of thermoplastic and especially polyester pipes is well-known. However, these pipes often have limited uses and cannot be used in the chemical processing industry where the pipe would be subjected to heat distorting temperatures, exposed to reactive materials, or used in reactive environments.

The present invention now provides for the production of a tube or pipe from thermoplastic-impregnated fibrous strands, which has performance advantages over prior art plastics pipes. The glass fiber, thermoplastic-reinforced pipe is especially useful in the chemical processing industry or as electrical conduit. The glass fiber thermoplastic-reinforced pipe has improved strength as a result of the glass fiber reinforcement. In addition, the fiber-reinforced thermoplastic pipe is corrosion resistant.

In accordance with the invention, therefore, there is now provided a process for producing a tube or pipe which comprises the steps of:
impregnating a plurality of glass filaments with an aqueous composition containing, based on the weight of the total composition, from 0.05 to 5% of an organosilane coupling agent, from 0.5 to 5% of a polyethylene oxide binder and from 30 to 50% of a thermoplastic resin powder having an average particle size of 5 to 50 µm;
drying the impregnated filaments;
curing the binder; and
winding the filaments to form a tube or pipe and heating the wound filaments to fuse the thermoplastic resin.

In a preferred aspect of the invention a fiberglass roving, such as a yarn or fibrous strand impregnated with a slurry containing a thermoplastic resin, a silane coupling agent, a PEO binder or film former thickening agent or rheology modifier may also be added to the slurry. The slurry is suitably applied to the glass fiber material during the fiber-forming operation. The resulting sized, thermoplastic-impregnated glass fiber rovings are fabricated into the fiber-reinforced tubes or pipes by preheating the rovings, winding the rovings around a mandrel or spindle at a predetermined wrap angle and heating the wrapped mandrel.

The thermoplastic-impregnated glass fiber tube has excellent mechanical properties relative to commercially available thermoplastic tubes or pipes.

The present invention uses any glass fiber conventionally utilised for the reinforcement of polymeric resins. The term "glass fibers" is used herein to mean filaments formed by attenuation of one or more streams of molten glass and to strands formed when such glass fiber filaments are gathered together in a forming process. The term also means yarns and cords formed by applying and/or twisting a multiplicity of strands together and to woven and nonwoven fabrics which are formed of such glass fiber strands, yarns, or cords. Preferably, the impregnating size formulation applied to the fibers in the process of the present invention is useable with E-type fibers having a diameter in the range of 7.6 to 22.9 µm (0.35 to 0.90 mil).

The individual components utilised in the impregnating size composition are commercially available materials.

In accordance with the invention, the glass fibers are reinforced with a composition including water as the carrier solvent, a silane coupling agent, a PEO binder or film former material, preferably a thickener or rheology modifier, and a matrix thermoplastic resin powder dispersed in the size composition to form a slurry.

Any suitable silane coupling agent can be employed in the successful practice of this invention. The coupling agent acts to produce adhesion between the matrix resin and provide strength development and retention of the matrix resin in the slurry. Preferably, the silane is an organosilane including, for example, gamma-aminopropyltriethoxysilane (commercially available from Union Carbide under the trade name "A-1100"). The coupling agent is contained in the slurry in an amount of 0.05 to 5 percent by weight.

Any suitable polyethylene oxide binder material can be employed. The binder or film former material aids in the handling and processing of the filaments during the fiber forming process, and have the ability to bond the thermoplastic powder particles to the fiber upon the evaporation of the water and the ability to suspend the particles in the slurry and subsequently bond them to the fibers. The binder material is contained in the slurry in an amount of 0.5 to 5 percent by weight.

Any suitable thickener material can be employed. The thickener material acts as a rheology modifier so that the thermoplastic powder particles will actually adhere to the fiber. Without the thickener material, the thermoplastic powder particles may stay behind on the rolls of the applicator while the carrier solvent (water) goes on the fiber. The result would be a rapid build-up of powder on the applicator rolls, which in turn, would rapidly cause fiber breakage.

Any suitable resin can be employed. The thermoplastic resins are dispersed into the size composition in the form of fine particles. The size of the powder particles is from 5 to 50 µm, preferably from 10 to 30 µm. The resin powder can be applied to the filaments in an amount of 5 to 50 percent by weight of the final prepreg yarn or strand. In preferred embodiments the amount of powder applied to the filaments is from 20 to 35 weight percent or 20 to 50 weight percent. One particularly suitable resin is polypropylene.

The size composition suspends the thermoplastic powder particles as a slurry. The slurry compositions are best produced by blending all materials in their liquid state with agitation. A uniform coating of the composition can be applied to the glass fibers in any suitable manner during the fiber forming process. Preferably, the slurry is applied to the surface of the glass fibers in the manner described in U.S. Patent No. 5,026,410. The slurry is sufficiently liquid to be applied to the fibers during the fiber-forming operation. Each fiber is coated by the slurry as the fibers are formed, that is, at or about the place in their formation where conventional size compositions are typically applied (e.g., between the bushing and the spindle on which the fibers are wound as a package). In one fiber forming process, the continuous fibers leave the bushing and are dipped into the slurry and are impregnated with the slurry. The highly loaded thermoplastic strands or rovings are subsequently dried in order to evaporate or remove the water. The impregnated rovings are then cured in order to set the binder or film former material. The curing or setting "glues" the thermoplastic powder particles along the surface of the fibers. The resultant impregnated rovings can be subsequently heated to allow the thermoplastic polymer particles to fuse.

The resultant continuous thermoplastic-impregnated rovings are then filament wound to produce a thermoplastic fiberglass pipe. The roving is wound around a mandrel or similar type spindle and subjected to a heat treating step in order to fuse the thermoplastic material. The angle at which the roving is wrapped around the mandrel may be changed depending upon the work loads to be put upon the pipe. In a preferred embodiment, the optimum wrap angle of the roving is oriented at about 60 degrees.

### EXAMPLE

The following thermoplastic slurry was applied to glass fibers during the forming operation to achieve a thermoplastic content of 23% relative to the total weight of the prepreg roving. The roving is then formed into tubes or piping.

| Composition and Range | |
|---|---|
| Polyethylene powder | 30 to 50% by weight |
| Polyethylene oxide | .5 to 5% by weight |
| Coupling Agent | .05 to 5% by weight |
| Water | balance to 100% |

The thermoplastic powder preferably has an average particle size between 5 and 40 µm and no particles retained by an 80-mesh screen (more preferably 115 mesh, most preferably 200 mesh). Other polyethylene oxides of different molecular weight, molecular weight distribution or branching may also be suitable, such as any of the Polyox series having a molecular weight between 100,000 and 4,000,000. Once the slurry was mixed together, continuous glass fibers were coated with the slurry mixture. The impregnated glass fibers were then collected into a roving, wound around a take-up bobbin, and dried so as to evaporate the water from the impregnated roving. The roving was then cured or set so as to allow the binder material to "glue" the thermoplastic powder particles along the surfaces of the glass fibers.

The roving was pulled under high tension past commercial infrared heating sources having a peak absorption wave of 2.7 to 3.0 ν for glass and 3.4 to 3.5 ν for polyethylene. The rovings were heated to a temperature of 149 to 176.8°C such that the polyethylene powder melted to a high viscosity fluid. At this time the rovings were wrapped on a 4.13 cm mandrel rotating at about 8 SF/M which had been preheated to approximately 168.5°C. After a number of wraps at a predetermined wrap angle the mandrel was cooled with the polyethylene/fiberglass wrapped roving. The mandrel was then extracted yielding a tube or pipe.

## Claims

1. A process for producing a tube or pipe which comprises the steps of:
impregnating a plurality of glass filaments with an aqueous composition containing, based on the weight of the total composition, from 0.05 to 5% of an organosilane coupling agent, from 0.5 to 5% of a polyethylene oxide binder and from 30 to 50% of a thermoplastic resin powder having an average particle size of 5 to 50 µm;
drying the impregnated filaments;
curing the binder; and
winding the filaments to form a tube or pipe and heating the wound filaments to fuse the thermoplastic resin.

2. A process according to claim 1, wherein the organosilane is gamma-aminopropyltriethoxysilane.

3. A process according to claim 1 or claim 2, wherein the thermoplastic resin has an average particle size from 10 to 30 µm.

4. A process according to any one of claims 1 to 3, wherein the composition contains 1.2% polyethylene oxide, 0.2 % gammaaminopropyltriethoxysilane and 58 to 60% water.

## Patentansprüche

1. Verfahren zur Herstellung eines Rohrs oder einer Leitung, das folgende Stufen umfaßt:
Imprägnieren zahlreicher Glasfasern mit einer wäßrigen Zusammensetzung, die, bezogen auf das Gewicht der Gesamtzusammensetzung, 0,05 bis 5% eines Organosilan-Kupplungsmittels, 0,05 bis 5% eines Polyethylenoxid-Bindemittels und 30 bis 50% eines pulverförmigen thermoplastischen Harzes mit einer durchschnittlichen Teilchengröße von 5 bis 50 µm enthält,
Trocknen der imprägnierten Fasern,
Härten des Bindemittels und
Aufwickeln der Fasern unter Bildung eines Rohrs oder einer Leitung und Erhitzen der gewickelten Fasern, um das thermoplastische Harz zu schmelzen.

2. Verfahren nach Anspruch 1, wobei das Organosilan γ-Aminopropyltriethoxysilan ist.

3. Verfahren nach Anspruch 1 oder 2, wobei das thermoplastische Harz eine durchschnittliche Teilchengröße von 10 bis 30 µm hat.

4. Verfahren nach einem der Ansprüche 1 bis 3, wobei die Zusammensetzung 1,2% Polyethylenoxid, 0,2% y-Aminopropyltriethoxysilan und 58 bis 60% Wasser enthält.

## Revendications

1. Procédé de fabrication d'un tube ou d'un tuyau qui comprend les étapes consistant à :
imprégner plusieurs filaments de verre d'une composition aqueuse contenant, en se basant sur le poids de la composition totale, de 0,05 à 5% d'un agent de couplage constitué par un organosilane, de 0,5 à 5% d'un liant constitué par un oxyde de polyéthylène et de 30 à 50% d'une poudre de résine thermoplastique ayant une granulométrie moyenne de 5 à 50 µm. ;
sécher les filaments imprégnés ;
durcir le liant ; et
enrouler les filaments de manière à former un tube ou un tuyau et chauffer les filaments enroulés de manière à faire fondre la résine thermoplastique.

2. Procédé selon la revendication 1, dans lequel l'organosilane est le gamma-aminopropyltriéthoxysilane.

3. Procédé selon la revendication 1 ou la revendication 2, dans lequel la résine thermoplastique a une granulométrie moyenne de 10 à 30 µm.

4. Procédé selon l'une quelconque des revendications 1 à 3, dans lequel la composition contient 1,2% d'oxyde de polyéthylène, 0,2% de gamma-aminopropyltriéthoxysilane et de 58 à 60% d'eau.
